# EUROPEAN PATENT APPLICATION

(11) **EP 4 378 800 A1**
(43) Date of publication of application: **05.06.2024**
(21) Application number: 23213132.6
(22) Date of filing: 29.11.2023
(51) Int. Cl.: B62D 15/02, B60W 30/06, G05D 1/246

(54) **PATH PLANNING METHOD, APPARATUS AND SYSTEM FOR AUTOMATIC PARKING, VEHICLE AND MEDIUM**

(30) Priority: 29.11.2022 CN 202211511223
(71) Applicant: Chongqing Changan Automobile Co., Ltd., Chongqing 400023 (CN)
(72) Inventor: FENG, Rong, Chongqing 400023 (CN); HE, Yong, Chongqing 400023 (CN)
(74) Representative: Schulz Junghans Patentanwälte PartGmbB

(57) **Abstract**

Disclosed are a path planning method, apparatus, and system for automatic parking, a vehicle, and a medium. The method includes: acquiring a current coordinate; performing automatic planning according to a preset preference parameter to obtain an endpoint coordinate; acquiring preset map data according to a path planning instruction; generating a directed topological graph according to the preset map data; matching the directed topological graph with the current coordinate and the endpoint coordinate according to a search algorithm to obtain a global topological path; extracting a target path point of the global topological path; and outputting an automatic parking path according to user configuration information and the target path point. The method can customize the endpoint according to the user's requirements, and realize the automatic planning of the vehicle's automatic parking path according to the current coordinate and the endpoint coordinate of the vehicle, and can also generate the directed topological graph for path planning through the preset map data, to get rid of the limitation of different map data formats on automatic parking path planning.

## Description

### Field of the Invention

The present application relates to the technical field of automatic driving, and in particular to a path planning method, apparatus, and system for automatic parking, a vehicle, and a medium.

### Background of the Invention

In the path planning of automatic parking, the related art only plans the path at the global road level, which cannot take into account the user's personalized parking needs, such as parking location and remote control, and is not well-compatible with different formats of map data due to the limitation of the accuracy and format of map data. Therefore, providing an automatic parking method that can meet the needs of users and has strong compatibility becomes an urgent problem to be solved.

### Summary of the Invention

To solve one or more of the above problems, the present application provides a path planning method for automatic parking, including:
acquiring a current coordinate;
performing automatic planning according to a preset preference parameter to obtain an endpoint coordinate;
acquiring preset map data according to a path planning instruction;
generating a directed topological graph according to the preset map data;
matching the directed topological graph with the current coordinate and the endpoint coordinate according to a search algorithm to obtain a global topological path;
extracting a target path point of the global topological path; and
outputting an automatic parking path according to user configuration information and the target path point.

The method performs automatic path planning according to a preset preference parameter to obtain an endpoint coordinate. Further, the method obtains the preset map data after abstract processing according to the path planning instruction and obtains a directed topological graph containing the topological relationship of the preset map data according to the connection relationship between each road and the connection relationship between each road node in the preset map data. Furthermore, according to a preset search algorithm, combining the acquired current coordinate and endpoint coordinate, the method takes the current coordinate as a starting point of the path planning and takes the endpoint coordinate as an endpoint of the path planning, and matches the topological path of the directed topological graph according to the starting point and the endpoint, to obtain a global topological path satisfying the requirements of the starting point and the endpoint. Furthermore, the method extracts each path point in the global topological path to screen out invalid path points in the global topological path to obtain target path points and then performs personalized planning on the automatic parking path according to the user configuration information and the target path points. By this method, the present application can generate a directed topological graph through preset map data to acquire a topological relationship related to a road in different map data, then get rid of the limitation of the original map data format on automatic parking path planning.

In some implementations, before the matching the directed topological graph with the current coordinate and the endpoint coordinate according to a search algorithm to obtain a global topological path, the method further includes generating the search algorithm, specifically including:
acquiring a cost function according to the preset preference parameter and obtaining a heuristic cost according to the cost function; and
generating an algorithm core according to the heuristic cost to generate the search algorithm.

In some implementations, the generating a directed topological graph according to the preset map data includes:
parsing the preset map data to obtain all roads and all nodes; and
parsing a connection relationship between each of the roads and a connection relationship between each of the nodes to generate the directed topological graph.

In some implementations, the extracting a target path point of the global topological path includes:
obtaining an initial path point according to the global topological path;
obtaining a vehicle constraint condition according to the preset map data; and
screening the initial path point according to a preset screening rule and the vehicle constraint condition to obtain the target path point.

In some implementations, the method further includes generating the preset map data, specifically including:
acquiring a map update instruction;
reading an initial map according to the map update instruction;
parsing a format of the initial map; and
selecting a parser of a corresponding type according to the format of the initial map, and parsing an initial map of a corresponding format via the parser to obtain the preset map data.

In some implementations, after the reading an initial map according to the map update instruction, the method further includes:
determining validity of the initial map according to first verification data, and outputting first verification information when the verification passes, or outputting map failure information when the verification fails; and
retrieving second verification data according to the first verification information, verifying integrity of the map according to the second verification data, and outputting second verification information when the verification passes, or outputting map missing information when the verification fails, the second verification information being used for parsing the format of the initial map.

In some implementations, after the acquiring preset map data according to a path planning instruction, the method further includes:
verifying validity of the current coordinate and the endpoint coordinate according to the preset map data; outputting coordinate invalid information when a validity verification result of the current coordinate is that the coordinate is invalid, or a validity verification result of the endpoint coordinate is that the coordinate is invalid.

In some implementations, after obtaining the global topological path, the method further includes:
reading path details of the global topological path; and
performing a validity analysis on the path details; outputting path invalid information when a validity analysis result of the path details is that the path is invalid.

The present application also provides a path planning apparatus for automatic parking, including:
a configuration management module, configured to acquire a current coordinate, and further configured to configure a preset preference parameter and perform automatic planning according to the preset preference parameter, to obtain an endpoint coordinate; and
a path planning module, configured to acquire a path planning instruction and preset map data and generate a directed topological graph according to the preset map data, further configured to match the directed topological graph with the current coordinate and the endpoint coordinate according to a search algorithm to obtain a global topological path, and further configured to extract a target path point of the global topological path and output an automatic parking path according to the target path point and user configuration information.

In some implementations, the apparatus further includes:
a diagnosis module, configured to determine validity of an initial map, verify integrity of the initial map, verify validity of the current coordinate and the endpoint coordinate, and perform validity analysis on path details; and
a planning event abstraction module, configured to coordinate data transmission between the configuration management module, the path planning module, and the diagnosis module.

The present application also provides a path planning system for automatic parking, including:
the above path planning apparatus;
a map management apparatus, configured to store an initial map and parse the initial map;
a map interface apparatus, configured to generate a reading interface of preset map data according to a parsing result of the initial map, so that a path planning layer can acquire the preset map data via the reading interface;
a data visualization apparatus, configured to acquire the automatic parking path and visualize the automatic parking path for display; and
a communication apparatus, configured to realize data interaction between the path planning apparatus, the map management apparatus, the map interface apparatus, and the data visualization apparatus.

The present application also provides a vehicle, including a memory, a processor, and a computer program stored on the memory and executable on the processor, the processor executing the program to implement the path planning method for automatic parking according to any one of the preceding claims.

The present application also provides a computer-readable storage medium storing thereon a computer program, the program, in some embodiments, is executed by a processor for implementing the path planning method for automatic parking according to any of the preceding claims.

Additional aspects and advantages of the present application will be set forth in part in the description that follows and, in part, will be obvious from the description, or may be learned by practice of the present application.

### Brief Description of the Drawings

The foregoing and/or additional aspects and advantages of the present application will become apparent and more readily appreciated from the following description of the embodiments, taken in conjunction with the drawings of which:
Fig. 1 is a flowchart diagram of a path planning method for automatic parking according to an embodiment of the present application;
Fig. 2 is a specific flowchart diagram of a path planning method for automatic parking according to an embodiment of the present invention;
Fig. 3 is a structural diagram of a path planning apparatus for automatic parking according to an embodiment of the present application;
Fig. 4 is a structural diagram of a path planning system for automatic parking according to an embodiment of the present application; and
Fig. 5 is a structural diagram of a vehicle according to an embodiment of the present application.

Illustration of drawing markings: 10, configuration management module; 20, path planning module; 30, planning event abstraction module; 40, diagnosis module; 100, path planning apparatus; 200, map management apparatus; 300, map interface apparatus; 400, data visualization apparatus; 500, communication apparatus; 1000, vehicle; 1100, processor; and 1200 memory.

### Detailed Description of the Embodiments

Embodiments of the present application are described in detail below, examples of embodiments are shown in the drawings, where identical or similar labels from beginning to end indicate identical or similar elements or elements having identical or similar functions. The embodiments described below with reference to the drawings are exemplary and are intended to be illustrative of the present application and are not to be construed as limiting the present application.

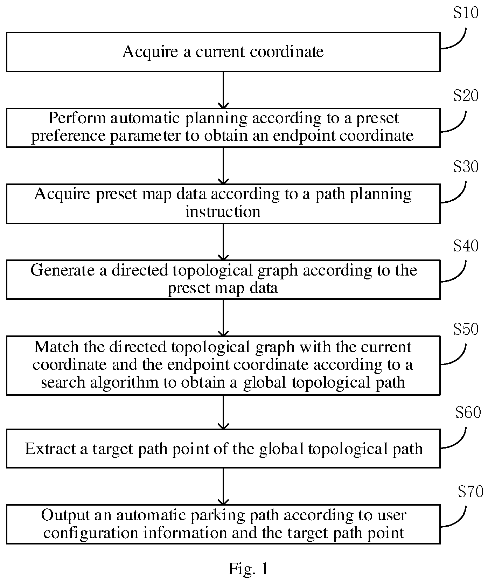

Referring to Fig. 1, the present application provides a path planning method for automatic parking, including:
S 10, acquire a current coordinate.
S20, perform automatic planning according to a preset preference parameter to obtain an endpoint coordinate.
S30, acquire preset map data according to a path planning instruction.
S40, generate a directed topological graph according to the preset map data.
S50, match the directed topological graph with the current coordinate and the endpoint coordinate according to a search algorithm to obtain a global topological path.
S60, extract a target path point of the global topological path.
S70, output an automatic parking path according to user configuration information and the target path point.

The method performs automatic path planning according to a preset preference parameter to obtain an endpoint coordinate. Further, the method obtains the preset map data after abstract processing according to the path planning instruction and obtains a directed topological graph containing the topological relationship of the preset map data according to the connection relationship between each road and the connection relationship between each road node in the preset map data. Furthermore, according to a preset search algorithm, combining the acquired current coordinate and endpoint coordinate, the method takes the current coordinate as a starting point of the path planning and takes the endpoint coordinate as an endpoint of the path planning, and matches the topological path of the directed topological graph according to the starting point and the endpoint, to obtain a global topological path satisfying the requirements of the starting point and the endpoint. Furthermore, the method extracts each path point in the global topological path to screen out invalid path points in the global topological path to obtain target path points and then performs personalized planning on the automatic parking path according to the user configuration information and the target path points. By this method, the present application can generate a directed topological graph through preset map data to acquire a topological relationship related to a road in different map data, then get rid of the limitation of the original map data format on automatic parking path planning.

The vehicle may obtain current coordinates. Automatic planning is performed according to a preset preference parameter to obtain the endpoint coordinate. Preset map data is acquired according to a path planning instruction. A directed topological graph is generated according to the preset map data.

According to the search algorithm, the global topological path is obtained by matching the directed topological graph with the current coordinate and the endpoint coordinate. A target path point of the global topological path is extracted. An automatic parking path is output according to the user configuration information and the target path point.

Specifically, the method obtains user configuration information in real-time to update the automatic parking path. For example, acquiring user configuration information to obtain newly added intersection information about the user, and outputting an automatic parking path according to the newly added intersection information and a target path point.

In some implementations, before S50, the method further includes generating a search algorithm, specifically including:
acquiring a cost function according to the preset preference parameter and obtaining a heuristic cost according to the cost function; and
generating an algorithm core according to the heuristic cost to generate the search algorithm.

The method can generate the cost function according to the user's requirements according to the preset preference parameters, to obtain the heuristic cost of the algorithm core according to the output result of the cost function, and then obtain the search algorithm. Through the search algorithm, a global topological path can be screened out from the directed topological graph, and then automatic parking path planning can be realized.

The vehicle may acquire a cost function according to the preset preference parameter and obtain a heuristic cost according to the cost function. The vehicle may generate an algorithm core according to the heuristic cost to generate the search algorithm.

Specifically, the search algorithm can take the A-star algorithm as the algorithm core, to obtain the algorithm core according to the output of the cost function, and then generate the search algorithm.

In some implementations, S40 includes:
parsing the preset map data to obtain all roads and all nodes; and
parsing a connection relationship between each of the roads and a connection relationship between each of the nodes to generate the directed topological graph.

The method can parse the preset map data to obtain all the roads and all the nodes. The road is each directed road in the preset map data, and the node is an endpoint of each road. Furthermore, the connection relationship between each road and the connection relationship between each node is analyzed, and other data apart from a topological relationship, such as map detail data, in preset map data are screened out to obtain a topological relationship between roads and between nodes, and then a corresponding directed topological graph is generated.

The vehicle may parse the preset map data to obtain all roads and all nodes. The vehicle may parse a connection relationship between each of the roads and a connection relationship between each of the nodes to generate the directed topological graph.

In some implementations, S60 includes:
obtaining an initial path point according to the global topological path;
obtaining a vehicle constraint condition according to the preset map data; and
screening the initial path point according to a preset screening rule and the vehicle constraint condition to obtain the target path point.

The method can obtain an initial path point corresponding to a parking path initially generated by a global topological path, and perform feasibility analysis on the initial path point according to vehicle constraint conditions in a preset map, namely, screening out invalid path points of the initial path point according to preset screening rules and vehicle constraint conditions, and taking the remaining path points as target path points.

The vehicle may obtain an initial path point according to the global topological path. The vehicle may obtain a vehicle constraint condition according to the preset map data. The vehicle may screen the initial path point according to a preset screening rule and the vehicle constraint condition to obtain the target path point.

Specifically, the preset screening rule may detect the repeated path points in the initial path point and screen out the repeated path points to streamline the data volume of the target path point. It is also possible to perform equidistant screening on initial path points on a path according to a preset interval, to reduce the density of path points within the preset interval. The vehicle constraint condition can be a vehicle constraint of vehicle dynamics or a constraint of lane boundary position on the path, and the initial path point is smoothed according to the lane boundary constraint and the vehicle dynamics constraint to automatically generate a target path point which can better fit the parking path.

In some implementations, the method further includes generating the preset map data, specifically including:
acquiring a map update instruction;
reading an initial map according to the map update instruction;
parsing a format of the initial map; and
selecting a parser of a corresponding type according to the format of the initial map, and parsing the initial map of the corresponding format via the parser to obtain the preset map data.

The method can obtain an initial map according to a map update instruction, and then update the map currently being used. Furthermore, by parsing the format of the initial map, a parser matching the initial map can be selected, and then the interface of the map is uniformly defined according to the semantic information and topological information about the initial map by the parser and is converted into a data format adapted to the present method to obtain preset map information; the preset map information includes a connection relationship between roads and a connection relationship between nodes in the initial map, and since the format is adapted to the present method, the limitation of the original data state, such as the data format of the initial map data and the map specification, on the path planning process can be avoided. Therefore, the path planning of the automatic parking process is realized according to the extracted topological relationship, which effectively expands the scope of the application of the method.

The vehicle may acquire a map update instruction. The vehicle may read the initial map according to the map update instruction and parse the format of the initial map. The vehicle may select a parser of a corresponding type according to the format of the initial map, and parse the initial map of the corresponding format via the parser to obtain the preset map data.

In some implementations, after the reading an initial map according to the map update instruction, the method further includes:
determining validity of the initial map according to first verification data, and outputting first verification information when the verification passes, or outputting map failure information when the verification fails; and
retrieving second verification data according to the first verification information, verifying integrity of the map according to the second verification data, and outputting second verification information when the verification passes, or outputting map missing information when the verification fails, the second verification information being used for parsing the format of the initial map.

The method can determine the validity of the initial map to confirm whether the preset map data can be updated via the initial map. When the initial map contains relevant map information about the current vehicle performing automatic parking path planning, first verification information can be output to invoke second verification information, and then the integrity of the initial map is confirmed again via the second verification information; and in the case where the initial map satisfies the validity and integrity determination at the same time, preset map data can be obtained via the initial map. The map failure information is output to the user when the initial map has failed, or the map missing information is output to the user when the initial map is valid but not incomplete. This enables the user to replace or update the initial map based on map failure information or map missing information.

The vehicle may determine validity of the initial map according to first verification data, and output first verification information when the verification passes, or output map failure information when the verification fails. The vehicle may retrieve second verification data according to the first verification information, verify integrity of the map according to the second verification data, and output second verification information when the verification passes, or output map missing information when the verification fails, the second verification information being used for parsing the format of the initial map.

In some implementations, after S30, the method further includes:
verifying validity of the current coordinate and the endpoint coordinate according to the preset map data; outputting coordinate invalid information when a validity verification result of the current coordinate is that the coordinate is invalid, or a validity verification result of the endpoint coordinate is that the coordinate is invalid.

The method can verify the validity of current coordinates and endpoint coordinates according to preset map data. When the coordinate position of the current coordinate does not meet the requirements of preset map data, for example, the coordinate point is not available, the coordinate point is not within the range of the map, or the coordinate point is within an illegal area (such as an area unable to travel and an illegal area), it can be determined that the validity verification result of the current coordinate is invalid coordinate, and then coordinate invalid information is output. The validity verification method for the endpoint coordinate is similar to the validity verification method for the current coordinates, which will not be described in detail. Further, when the coordinate invalid information is output, the method may update the current coordinate again and automatically plan the endpoint coordinate again according to the preset preference parameter to re-plan the path of the automatic parking, or re-acquire the preset preference parameter to update the automatic planning result.

The vehicle may verify validity of the current coordinate and the endpoint coordinate according to the preset map data, output coordinate invalid information when a validity verification result of the current coordinate is that the coordinate is invalid, or a validity verification result of the endpoint coordinate is that the coordinate is invalid.

In some implementations, after S50, the method further includes:
reading path details of the global topological path; and
performing a validity analysis on the path details; outputting path invalid information when a validity analysis result of the path details is that the path is invalid.

This method can analyze the validity of the global topological path to ensure the validity of automatic path planning. When the corresponding path details in the global topological path do not match the map, or some of the path details are in an unavailable state (for example, the road is restricted, the road cannot pass through due to construction, and the path details cannot partially match to the corresponding road), then the validity analysis result of the path details is determined as path invalid, and then path invalid information is output. Specifically, it is also possible to re-acquire a current coordinate, an endpoint coordinate, and a directed topological graph according to path invalid information, and match the directed topological graph with the current coordinate and the endpoint coordinate according to a search algorithm to update a global topological path.

The vehicle may read the path details of the global topological path. The vehicle may perform a validity analysis on the path details, and output path invalid information when a validity analysis result of the path details is that the path is invalid.

Specifically, the path details may include whether the path detail parameters of the global topological path are complete, whether the path point coordinates are within an illegal area and the like.

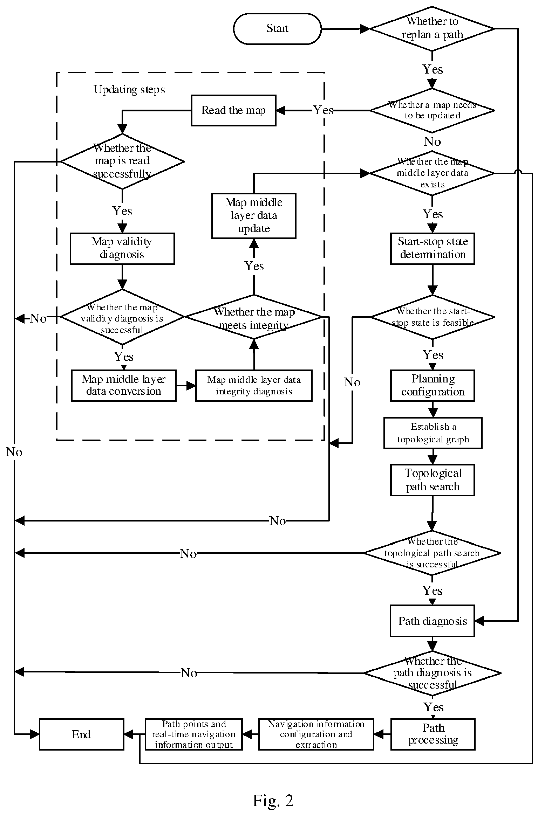

Referring to Fig. 2, the method provides a specific path planning method. First, the method first analyzes the validity of the preset map data and performs the updating steps of the preset map when the preset map data needs to be updated. Alternatively, in the case where the preset map data does not need to be updated, it is determined whether interface data corresponding to the middle layer data of the map already exists. When interface data exists, the current coordinate is acquired and the endpoint coordinate is obtained according to a preset preference parameter plan, to determine whether the start-stop state is legal or not according to the current coordinate and the endpoint coordinate. Furthermore, in the case where it is determined that the start-stop state is feasible, a path planning instruction is generated to acquire preset map data, and planning configuration is performed according to the preset map data to establish a directed topological graph.

Furthermore, according to a preset search algorithm, a current coordinate, and an endpoint coordinate, a topological path search is performed on a directed topological graph, and then a search result is determined; when the topological path search is successful, it can be considered that a global topological path has been successfully matched currently. To ensure the validity of the global topological path, the method further performs path diagnosis on the global topological path to detect whether each path point in the currently obtained global topological path is valid and available.

Further, after path diagnosis of the global topological path is passed, each path point in the global topological path is processed, such as de-duplication processing and smoothing processing. The real-time updated user configuration information is extracted, such as a personalized configuration of navigation information by a user, to output path points and real-time navigation information to output an automatic parking path according to the path points and the real-time navigation information.

Specifically, the updating step of the preset map may be reading an initial map, and in the case where the initial map is successfully read, checking the validity of the initial map, and when the initial map is valid, converting middle layer data in the initial map, such as parsing the initial map, and generating a corresponding interface according to the parsing result. Furthermore, integrity diagnosis can be performed on the new interface data obtained after the middle layer data conversion, and when the integrity of the new interface data complies with the requirements, preset map data can be updated according to the new interface data.

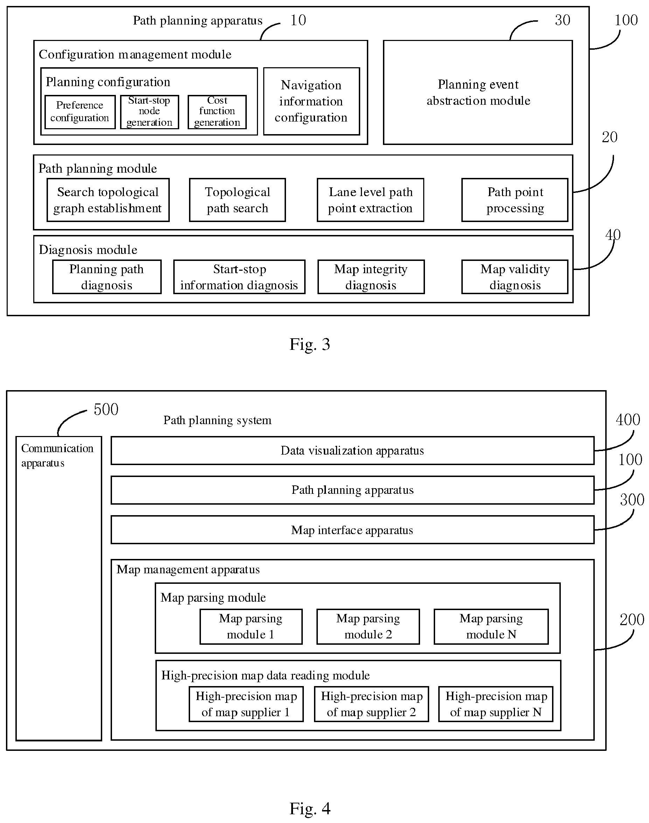

Referring to Fig. 3, the present application also provides a path planning apparatus 100 for automatic parking, including:
A configuration management module 10 is configured to acquire a current coordinate and further configured to configure a preset preference parameter and perform automatic planning according to the preset preference parameter, to obtain an endpoint coordinate.

A path planning module 20 is configured to acquire a path planning instruction and preset map data and generate a directed topological graph according to the preset map data, further configured to match the directed topological graph with the current coordinate and the endpoint coordinate according to a search algorithm to obtain a global topological path, and further configured to extract a target path point of the global topological path and output an automatic parking path according to the target path point and user configuration information.

The apparatus 100 can confirm the starting position of the automatic parking path through the configuration management module 10, and realize the customized generation of the endpoint coordinates according to the preset preference parameters of the user. Furthermore, the path planning module 20 can extract preset map data for path planning according to the path planning instruction, and then generate a directed topological graph. Furthermore, a global topological path is obtained by matching a directed topological graph with a search algorithm, current coordinates, and endpoint coordinates, to extract a target path point in the global topological path, and thus an automatic parking path is obtained by combining the target path point with user configuration information. With this apparatus, the present application can confirm the starting point and the endpoint according to the configuration management module 10, and realize the call to the map data via the path planning module 20, and further obtain a corresponding automatic parking path.

In particular, the configuration management module 10 may also generate a cost function such that the path planning module 20 generates a search algorithm based on the cost function. The configuration management module 10 may also collect user configuration information so that the path planning module 20 may output an automatic parking path in conjunction with the target path points according to the user configuration information generated by the configuration management module 10.

Referring to Fig. 3, in some implementations, the apparatus further includes:
A diagnosis module 40 is configured to determine validity of an initial map, verify integrity of the initial map, verify validity of the current coordinate and the endpoint coordinate, and perform validity analysis on path details.

A planning event abstraction module 30 is configured to coordinate data transmission between the configuration management module 10, path planning module 20, and diagnosis module 40.

The present apparatus 100 may diagnose the availability of various data acquired or generated by the present apparatus 100 via the diagnosis module 40, such as verifying the validity and integrity of the initial map, the validity of the current coordinate and endpoint coordinate, and the validity of the path details. In addition, the planning event abstraction module 30 is configured to coordinate data transmission between the configuration management module 10, path planning module 20, and diagnosis module 40, to realize the calling of required data among various modules and the data transmission of the cooperation process among modules, thereby efficiently realizing the planning of the automatic parking path.

Referring to Fig. 4, the present application also provides a path planning system for automatic parking, including:
the above path planning apparatus 100;
a map management apparatus, configured to store an initial map and parse the initial map;
a map interface apparatus, configured to generate a reading interface of preset map data according to a parsing result of the initial map, so that the path planning layer can acquire the preset map data via the reading interface;
a data visualization apparatus, configured to acquire the automatic parking path and visualize the automatic parking path for display; and
a communication apparatus, configured to realize data interaction between the path planning apparatus 100, the map management apparatus 200, the map interface apparatus 300, and the data visualization apparatus 400.

The present application can store an initial map and parse the map by the map management apparatus 200 to generate map intermediate data that can get rid of the data format limitation of the initial map. Through the map interface apparatus 300, the parsed map intermediate data can be acquired to generate a reading interface of preset map data, so that the path planning layer can effectively acquire the preset map data. The data visualization apparatus 400 may visually display the automatic parking path generated by the path planning apparatus 100. The communication apparatus 500 can implement a communication interaction process for each apparatus in the automatic parking system so that each apparatus can acquire the required communication data. With this system, the present application can effectively generate and display a corresponding automatic parking path according to the requirements of a user.

Specifically, the map management apparatus 200 includes a map parsing module and a high-precision map data reading module; the high-precision map provided on the map is read by the high-precision map reading module, namely, an initial map is read, and the initial map provided by the map supplier is read through the map parsing module to obtain map intermediate data containing topological relationships between roads and between nodes in the initial map.

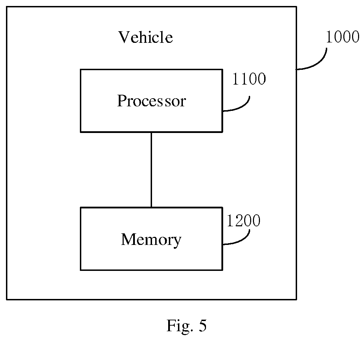

Referring to Fig. 5, the present application also provides a vehicle 1000 including a memory 1200, a processor 1100, and a computer program stored on the memory 1200 and executable on the processor 1100, the processor 1100 executing the program to implement the path planning method for automatic parking according to any one of the above.

The technical effects that can be achieved by the vehicle 1000 of the present application have been mentioned in the above part, and will not be described in detail here.

The present application also provides a computer-readable storage medium storing thereon a computer program, the program is executed by a processor for implementing the path planning method for automatic parking of any of the above.

The present application provides a computer program stored in a computer-readable storage medium for causing a processor to implement the path planning method for automatic parking according to any one of the preceding claims, thereby achieving the advantageous effects of the above path planning method for automatic parking. The benefits of the redundant time synchronization method have been described in detail above and will not be described in detail herein.

In the description of the specification, reference terms "one embodiment", "some embodiments", "example", "specific example", or "some examples", and the like mean that a particular feature, structure, material, or characteristic described in connection with the embodiment or example is included in at least one embodiment or example of the present application. In the specification, schematic representations of the above terms do not necessarily refer to the same embodiment or example. Furthermore, the specific features, structures, materials, or characteristics described may be combined in any or N embodiments or examples in any suitable manner. Furthermore, combinations and combinations of the various embodiments or examples and features of the various embodiments or examples described in the specification can be made by those skilled in the art without departing from the scope of the specification.

Furthermore, the terms "first" and "second" are used for descriptive purposes only and are not to be understood as indicating or implying relative importance or implicitly designating the number of technical features indicated. Thus, a feature defined as "first" or "second" may explicitly or implicitly include at least one of the features.

Any process or method description in a flowchart or otherwise described herein may be understood to represent a module, segment, or portion of code including one or more executable instructions for implementing steps of a custom logic function or process, and the scope of the preferred implementations of the present application includes additional implementations; the functions may be performed in a substantially simultaneous manner, or in reverse order, out of the order shown or discussed, including depending on the functionality involved, as would be understood by those skilled in the art to which the embodiments of the present application pertain.

It will be appreciated by those of ordinary skill in the art that the implementation of all or part of the steps carried by the method of the embodiments may be accomplished by a program directed to the relevant hardware, that the program may be stored in a computer-readable storage medium, and that the program, when executed, includes one of the steps of the method embodiments or a combination thereof.

While embodiments of the present application have been shown and described above, it will be understood that the above-described embodiments are exemplary and are not to be construed as limitations of the present application and that variations, modifications, substitutions, and alterations to the above-described embodiments may be made by one of ordinary skill in the art within the scope of the present application.

## Claims

1. A path planning method for automatic parking, comprising:
acquiring a current coordinate;
performing automatic planning according to a preset preference parameter to obtain an endpoint coordinate;
acquiring preset map data according to a path planning instruction;
generating a directed topological graph according to the preset map data;
matching the directed topological graph with the current coordinate and the endpoint coordinate according to a search algorithm to obtain a global topological path;
extracting a target path point of the global topological path; and
outputting an automatic parking path according to user configuration information and the target path point.

2. The path planning method according to claim 1, wherein before the matching the directed topological graph with the current coordinate and the endpoint coordinate according to a search algorithm to obtain a global topological path, the method further comprises generating the search algorithm, specifically comprising:
acquiring a cost function according to the preset preference parameter and obtaining a heuristic cost according to the cost function; and
generating an algorithm core according to the heuristic cost to generate the search algorithm.

3. The path planning method according to claim 1, wherein the generating a directed topological graph according to the preset map data comprises:
parsing the preset map data to obtain all roads and all nodes; and
parsing a connection relationship between each of the roads and a connection relationship between each of the nodes to generate the directed topological graph.

4. The path planning method according to claim 1, wherein the extracting a target path point of the global topological path comprises:
obtaining an initial path point according to the global topological path;
obtaining a vehicle constraint condition according to the preset map data; and
screening the initial path point according to a preset screening rule and the vehicle constraint condition to obtain the target path point.

5. The path planning method according to any one of claims 1 to 4, wherein the method further comprises generating the preset map data, specifically comprising:
acquiring a map update instruction;
reading an initial map according to the map update instruction;
parsing a format of the initial map; and
selecting a parser of a corresponding type according to the format of the initial map, and parsing an initial map of a corresponding format via the parser to obtain the preset map data.

6. The path planning method according to claim 5, wherein after the reading an initial map according to the map update instruction, the method further comprises:
determining validity of the initial map according to first verification data, and outputting first verification information when the verification passes, or outputting map failure information when the verification fails; and
retrieving second verification data according to the first verification information, verifying integrity of the map according to the second verification data, and outputting second verification information when the verification passes, or outputting map missing information when the verification fails, the second verification information being used for parsing the format of the initial map.

7. The path planning method according to any one of claims 1 to 4, wherein after the acquiring preset map data according to a path planning instruction, the method further comprises:
verifying validity of the current coordinate and the endpoint coordinate according to the preset map data; outputting coordinate invalid information when a validity verification result of the current coordinate is that the coordinate is invalid, or a validity verification result of the endpoint coordinate is that the coordinate is invalid.

8. The path planning method according to any one of claims 1 to 4, wherein after obtaining the global topological path, the method further comprises:
reading path details of the global topological path; and
performing a validity analysis on the path details; outputting path invalid information when a validity analysis result of the path details is that the path is invalid.

9. A path planning apparatus for automatic parking, comprising:
a configuration management module, configured to acquire a current coordinate, and further configured to configure a preset preference parameter and perform automatic planning according to the preset preference parameter, to obtain an endpoint coordinate; and
a path planning module, configured to acquire a path planning instruction and preset map data and generate a directed topological graph according to the preset map data, further configured to match the directed topological graph with the current coordinate and the endpoint coordinate according to a search algorithm to obtain a global topological path, and further configured to extract a target path point of the global topological path and output an automatic parking path according to the target path point and user configuration information.

10. The path planning apparatus according to claim 9, wherein the apparatus further comprises:
a diagnosis module, configured to determine validity of an initial map, verify integrity of the initial map, verify validity of the current coordinate and the endpoint coordinate, and perform validity analysis on path details; and
a planning event abstraction module, configured to coordinate data transmission between the configuration management module, the path planning module, and the diagnosis module.

11. A path planning system for automatic parking, comprising:
the path planning apparatus according to claim 9 or 10;
a map management apparatus, configured to store an initial map and parse the initial map;
a map interface apparatus, configured to generate a reading interface of preset map data according to a parsing result of the initial map, so that a path planning layer can acquire the preset map data via the reading interface;
a data visualization apparatus, configured to acquire the automatic parking path and visualize the automatic parking path for display; and
a communication apparatus, configured to realize data interaction between the path planning apparatus, the map management apparatus, the map interface apparatus, and the data visualization apparatus.

12. A vehicle, comprising a memory, a processor, and a computer program stored on the memory and executable on the processor, the processor executing the program to implement the path planning method for automatic parking according to any one of claims 1 to 8.

13. A computer-readable storage medium storing thereon a computer program, the program, when executed by a processor, being used for implementing the path planning method for automatic parking according to any one of claims 1 to 8.
